# EUROPÄISCHE PATENTANMELDUNG

(11) **EP 0 977 019 A1**
(43) Veröffentlichungstag der Anmeldung: **02.02.2000**
(21) Anmeldenummer: 99111473.7
(22) Anmeldetag: 12.06.1999
(51) Int. Cl.: G01F 23/00

(54) **Kraftstoffvorratsanzeige für einen Kraftstoffbehälter eines Kraftfahrzeuges**

(30) Priorität: 29.07.1998 DE 19834165
(71) Anmelder: Volkswagen Aktiengesellschaft, 38436 Wolfsburg (DE)
(72) Erfinder: Gerdtz, Uwe Dipl.-Ing., 38118 Braunschweig (DE); Schmidtchen, Jörg Dipl.-Ing., 38527 Meine (DE)

(57) **Zusammenfassung**

Die vorliegende Erfindung betrifft eine Kraftstoffvorratsanzeige für einen Kraftstoffbehälter (10) eines Kraftfahrzeugs, welches eine ein Kraftstoffverbrauchsignal (30) abgebende Vorrichtung (28) zum Messen des Kraftstoffverbrauchs einer Brennkraftmaschine aufweist. Diese Kraftstoffvorratsanzeige ist gekennzeichnet durch eine Endlagenschaltereinrichtung mit wenigstens einem Endlagenschalter (32,36,38,40) im Kraftstoffbehälter (10), welcher in Schwerkraftrichtung oberhalb einer Kraftstoffentnahmestelle (34) in einer Höhe angebracht ist, welche einem vorbestimmten Füllstand (17,19) entspricht, wobei die Endlagenschaltereinrichtung derart ausgebildet ist, daß diese ein Endlagenschaltersignal abgibt, welches davon abhängig ist, welcher oder welche der Endlagenschalter (32,36,38,40) in Kraftstoff eintauchen; und eine elektrische Schaltung (26), welche aus dem Kraftstoffverbrauchsignal (30) zusammen mit jedem Endlagenschaltersignal einen Wert für die Kraftstoffvorratsanzeige berechnet.

## Beschreibung

Die Erfindung betrifft eine Kraftstoffvorratsanzeige für einen Kraftstoffbehälter eines Kraftfahrzeuges, welches eine ein Kraftstoffverbrauchsignal abgebende Vorrichtung zum Messen des Kraftstoffverbrauchs einer Brennkraftmaschine aufweist, gemäß dem Oberbegriff des Anspruchs 1.

In einem Kraftstoffbehälter eines Kraftfahrzeuges ist herkömmlicherweise ein Vorratsgeber für eine Kraftstoffvorratsanzeige angeordnet. Dieser ist ein Hebelgeber oder ein Tauchrohrgeber mit einem Schwimmer, der sich mit dem Kraftstoff hebt bzw. senkt. Mit dieser Hubbewegung wird über eine Kontaktbrücke oder über ein Hebelsystem ein Widerstand und damit eine Stromstärke in einem Stromkreislauf verändert, wobei die von einem Meßgerät gemessene Stromstärke als Kraftstoff-Füllstand bzw. Kraftstoffvorratsanzeige verwendet wird. Die Skala des Meßgerätes des Stromkreislaufes ist in Vorratsmengen geeicht. Hierbei ist es jedoch nachteilig, daß die Anzeige auch von einem Neigungszustand des Kraftfahrzeuges abhängig ist und somit ggf. bei geneigtem Fahrzeug eine fehlerhafte Anzeige erfolgt. Ferner ist bei einem Mehrkammerkraftstoffbehälter eine kostenintensive, entsprechende Vielzahl von Hebelgebern oder Tauchrohrgebern erforderlich, wobei es trotzdem zu Anzeigelücken von bis zu fünf Liter kommt.

Es sind zwar beispielsweise aus der EP 0 108 239 B1 oder der DE 29 41 716 C2 Vorrichtungen zum Messen des Verbrauchs einer Brennkraftmaschine bekannt, jedoch ermöglichen diese keinen Rückschluß auf einen Füllstand eines Kraftstoffbehälters.

Der vorliegenden Erfindung liegt daher die Aufgabe zugrunde, eine Kraftstoffvorratsanzeige der obengenannten Art zur Verfügung zu stellen, wobei die obengenannten Nachteile überwunden werden und eine verbesserte und in jedem Betriebszustand des Fahrzeuges zuverlässigere Anzeige des Füllstandes des Kraftstoffbehälters erzielt wird.

Diese Aufgabe wird erfindungsgemäß durch eine Kraftstoffvorratsanzeige der o. g. Art mit den in Anspruch 1 gekennzeichneten Merkmalen gelöst. Vorteilhafte Ausgestaltungen der Erfindung sind in den abhängigen Ansprüchen angegeben.

Dazu ist die o. g. Kraftstoffvorratsanzeige erfindungsgemäß gekennzeichnet durch eine Endlagenschaltereinrichtung mit wenigstens einem Endlagenschalter im Kraftstoffbehälter, welcher in Schwerkraftrichtung oberhalb einer Kraftstoffentnahmestelle in einer Höhe angebracht ist, welche einem vorbestimmten Füllstand entspricht, wobei die Endlagenschaltereinrichtung derart ausgebildet ist, daß diese ein Endlagenschaltersignal abgibt, welches davon abhängig ist, welcher oder welche der Endlagenschalter in Kraftstoff eintauchen und welche nicht; sowie eine elektrische Schaltung, welche aus dem Kraftstoffverbrauchsignal zusammen mit jedem Endlagenschaltersignal einen Wert für die Kraftstoffvorratsanzeige berechnet.

Dies hat den Vorteil, daß auf einfache und kostengünstige Weise eine genaue und zuverlässige Anzeige des aktuell im Kraftstoffbehälter befindlichen Kraftstoffvorrats erzielt wird. Die erfindungsgemäße Kraftstoffvorratsanzeige ist weitestgehend unabhängig von einem Nennvolumen des Kraftstoffbehälter. Die Endlagenschaltereinrichtung definiert dabei mit dem bzw. den Endlagenschaltern Fixpunkte, wobei der Füllstand des Kraftstoffbehälters an diesen Fixpunkt zuverlässig angezeigt wird. Zwischen diesen Fixpunkten sorgt die Auswertung des Kraftstoffverbrauchsignals für eine genaue Kraftstoffvorratsanzeige, da dieses Signal über die Zeit aufsummiert bzw. integriert ein Volumen eines entnommenen Kraftstoffes ergibt.

Um einem Fahrer des Kraftfahrzeuges aktuelle Betriebsparameter desselben zur Kenntnis zu bringen ist in besonders vorteilhafter Weise ein Anzeigeinstrument vorgesehen, welches mit der elektrischen Schaltung verbunden ist und einen Wert für den Kraftstoffverbrauch und/oder einen Wert für die Kraftstoffvorratsanzeige anzeigt.

In einer besonders bevorzugten Ausführungsform ist die elektrische Schaltung ein elektronischer Schaltkreis, insbesondere ein Mikroprozessor oder eine Datenverarbeitungsvorrichtung.

Für eine Leerwarnanzeige umfaßt die Endlagenschaltereinrichtung einen Endlagenschalter für eine Leeranzeige, welcher in Schwerkraftrichtung oberhalb der Kraftstoffentnahmestelle in einer ersten Höhe angeordnet ist, welche einem minimalen Füllstand des Kraftstoffbehälters entspricht. Hierdurch ist sichergestellt, daß auch bei einer Leeranzeige noch eine gewisse Menge an Kraftstoff zum Fördern an die Brennkraftmaschine zur Verfügung steht.

Zweckmäßigerweise ist der Endlagenschalter für die Leeranzeige an einer im Kraftstofftank angeordneten Kraftstoff-Fördereinheit vorgesehen.

Für eine Reservewarnanzeige umfaßt die Endlagenschaltereinrichtung einen Endlagenschalter für eine Reserveanzeige, welcher in Schwerkraftrichtung oberhalb der Kraftstoffentnahmestelle in einer zweiten Höhe angeordnet ist, welche einem Füllstand des Kraftstoffbehälters entspricht, bei bzw. unterhalb dem ein Reservewarnsignal, wie beispielsweise eine Reservewarnleuchte, aktiviert ist.

Zweckmäßigerweise ist der Endlagenschalter für die Reserveanzeige an einer im Kraftstofftank angeordneten Kraftstoff-Fördereinheit vorgesehen.

Für eine Anzeige eines vollen Kraftstoffbehälters umfaßt die Endlagenschaltereinrichtung einen Endlagenschalter für eine Vollanzeige, welcher in einer dritten Höhe über der Kraftstoffentnahmestelle angeordnet ist, welche einem maximalen Füllstand des Kraftstoffbehälters entspricht.

Dadurch, daß der Endlagenschalter für die Vollanzeige an einem im Kraftstofftank angeordneten Schnellentlüftungsnippel vorgesehen ist, hat der Endlagenschalter für die Vollanzeige immer einen definierten Abstand von einem einen Volumenabschaltpunkt bestimmenden Bauteil. Dadurch ist in jedem Betriebszustand immer eine zuverlässige Vollanzeige gewährleistet.

Beispielsweise bei Kraftstoffbehältern mit mehreren Kammern umfaßt die Endlagenschaltereinrichtung wenigstens einen zusätzlichen Endlagenschalter, welcher in Schwerkraftrichtung oberhalb der Kraftstoffentnahmestelle in einer vierten Höhe zwischen der ersten und dritten Höhe angeordnet ist.

Zweckmäßigerweise ist die erste Höhe niedriger als die zweite Höhe und die zweite Höhe niedriger als die dritte Höhe.

Einen einfachen und Betriebssicheren Aufbau erzielt man dadurch, daß für jeden Endlagenschalter ein in den Kraftstofftank eingeschweißter Halter vorgesehen ist.

Zur weiteren Erhöhung der Genauigkeit der Kraftstoffvorratsanzeige ist in einem Tankstutzen des Kraftstoffbehälters ein Kraftstoffvolumen-Meßgerät, insbesondere ein Durchflußmesser, vorgesehen, welches ein dem durch den Tankstutzen geflossenen Kraftstoffes entsprechendes Kraftstoff-Füllsignal an die elektrische Schaltung abgibt, wobei die elektrische Schaltung den Wert für die Kraftstoffvorratsanzeige zusätzlich unter Berücksichtigung das Kraftstoff-Füllsignal berechnet.

Eine weitere Erhöhung der Genauigkeit der Kraftstoffvorratsanzeige auch bei Fahrzeugneigungen erzielt man dadurch, daß ein Neigunssensor vorgesehen ist, welcher eine Neigung des Fahrzeugs bzgl. der Schwerkraftrichtung bestimmt und ein entsprechendes Neigungssignal an die elektrische Schaltung abgibt, wobei die elektrische Schaltung den Wert für die Kraftstoffvorratsanzeige zusätzlich unter Berücksichtigung das Neigungssignals berechnet.

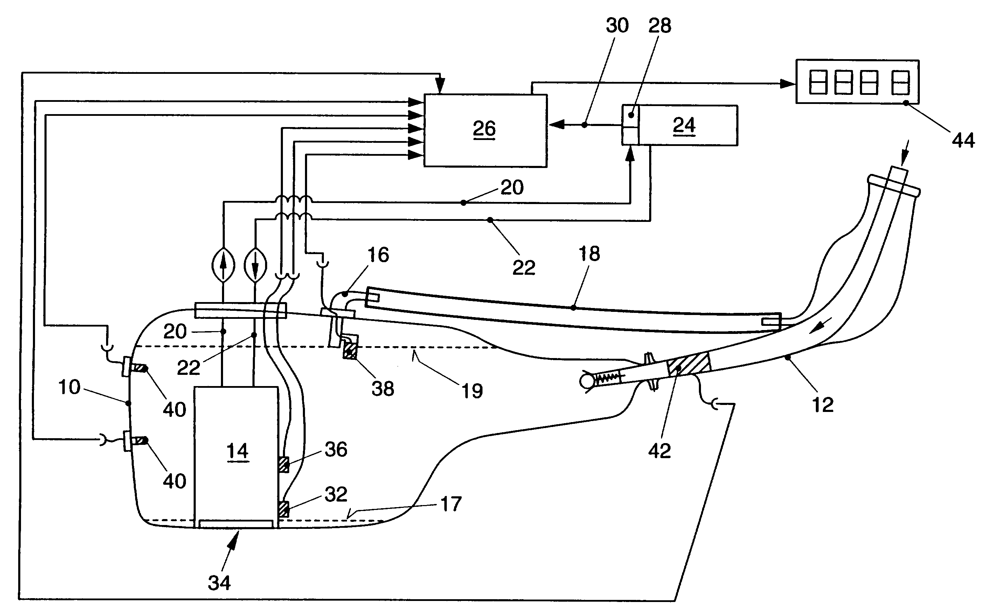

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. eine bevorzugte Ausführungsform einer in einem Kraftstoffbehälter angeordneten Kraftstoffvorratsanzeige in schematischer Schnittansicht.

Ein wesentliches Merkmal der Erfindung liegt in der Auswertung mehrerer Signale von verschiedenen signalerzeugenden Geräten, welche insbesondere in oder an einer Kraftstoffbehälteranlage eines Kraftfahrzeuges angeordnet sind. Eine mit einer bevorzugten Ausführungsform der erfindungsgemäßen Kraftstoffvorratsanzeige ausgestattete Kraftstoffbehälteranlage ist in der einzigen Fig. in einer Schnittansicht schematisch dargestellt. Diese Kraftstoffbehälteranlage umfaßt einen Kraftstoffbehälter 10, einen Tankstutzen 12, eine Kraftstoff-Fördereinheit 14 und einen Schnellentlüftungsnippel 16 mit Entlüftungsystem 18. Bezugszeichen 17 bezeichnet einen minimalen Füllstand und Bezugszeichen 19 bezeichnet einen maximalen Füllstand des Kraftstoffbehälters 10.

Die Kraftstoff-Fördereinheit 14 fördert über eine erste Kraftstoffleitung 20 Kraftstoff aus dem Kraftstoffbehälter 10 zu einer Einspritzanlage 24 oder einem Vergaser einer nicht dargestellten Brennkraftmaschine. Über eine zweite Kraftstoffleitung 22 wird überschüssiger Kraftstoff in den Kraftstoffbehälter 10 zurück gefördert, so daß sichergestellt ist, daß der Vergaser bzw. die Kraftstoffeinspritzanlage 24 und nicht dargestellte Kraftstoff-Einspritzventile immer mit kühlem Kraftstoff versorgt werden.

Es ist ferner ein integrierter Schaltkreis oder Prozessor 26 vorgesehen, welcher aus einer Vorrichtung 28 zur Kraftstoffverbrauchsmessung ein Kraftstoffverbrauchsignal 30 erhält. Diese Vorrichtung 28 ist in der beispielhaften Ausführungsform in die Einspritzanlage 24 integriert. Weiterhin ist der Prozessor 26 mit verschiedenen Endlagenschaltern verbunden, welche jeweilige Endlagenschaltersignale an den Prozessor abgeben, wobei die jeweiligen Endlagenschaltersignale den Prozessor darüber informieren, ob der jeweilige Endlagenschalter in Kraftstoff eintaucht oder nicht. In der beispielhaft dargestellten bevorzugten Ausführungsform sind folgende Endlagenschalter vorgesehen:

Ein erster Endlagenschalter 32 für eine "Leeranzeige" ist in einer ersten Höhe in Schwerkraftrichtung oberhalb einer Kraftstoffentnahmestelle bzw. Pumpenansaugpunkt 34 der Kraftstoff-Fördereinheit 14 und an letzterer befestigt angeordnet. Dies stellt sicher, daß auch bei einer Anzeige eines leeren Kraftstoffbehälters noch Kraftstoff zum Fördern an die Einspritzanlage 24 zur Verfügung steht.

Ein zweiter Endlagenschalter 36 für eine "Reserveanzeige" ist in einer zweiten Höhe in Schwerkraftrichtung oberhalb einer Kraftstoffentnahmestelle bzw. Pumpenansaugpunkt 34 der Kraftstoff-Fördereinheit 14 angeordnet. Dieser Signalgeber 36 ist an der Kraftstoff-Fördereinheit 14 angeordnet und definiert einen Füllstand des Kraftstoffbehälters 10, bei bzw. unterhalb dem eine Reservewarnleuchte aufleuchtet und einem Fahrer des Kraftfahrzeuges signalisiert, daß Kraftstoff nachgefüllt werden muß.

Ein dritter Endlagenschalter 38 für eine "Vollanzeige" ist in einer dritten Höhe in Schwerkraftrichtung oberhalb einer Kraftstoffentnahmestelle bzw. Pumpenansaugpunkt 34 der Kraftstoff-Fördereinheit 14 angeordnet. Dieser Signalgeber 38 ist baulich am Schnellentlüftungsventil 16 angeordnet und zusammen mit diesem in den Kraftstoffbehälter 10 eingeschweißt. Der Endlagenschalter 38 hat auf diese Weise immer einen definierten Abstand von einem einen Volumenabschaltpunkt definierenden Bauteil und eine "Vollanzeige" ist immer gewährleistet.

Weitere zusätzliche Endlagenschalter 40 sind oberhalb der Kraftstoffentnahmestelle 34 in jeweiligen Höhen zwischen der ersten und dritten Höhe angeordnet, wobei insbesondere Kraftstoffbehälter mit mehreren Kammern diese zusätzlichen Endlagenschalter 40 benötigen.

Somit liefert jeder einzelne Endlagenschalter 32, 36, 38 und 40 für eine ganz bestimmte Höhe ein Signal, welches mit einem Befüllungszustand des Kraftstoffbehälter korrespondiert. Die Endlagenschalter 32, 36, 38 und 40 definieren Fixpunkte für den Füllstand des Kraftstoffbehälters 10. Der Füllstand zwischen diesen Fixpunkten wird vom Prozessor 26 unter Verwendung des Kraftstoffverbrauchsignals 30 berechnet. Beispielsweise entspricht die erste Höhe einem Füllstand von 0 bis 5 Liter oder 0 bis 7 Liter und die zweite Höhe einem Füllstand von 5 bis 15 Liter oder 7 bis 10 Liter Kraftstoff.

Nach einem Betanken des Kraftstoffbehälters 10 informieren die nacheinander bei steigendem Füllstand aktivierten Endlagenschalter 32, 36, 38 und 40 den Prozessor 26 über einen aktuellen Füllstand. Zum Bestimmen des genauen Füllstandes nach Beendigung des Betankens zwischen zwei jeweiligen Endschaltern 32, 36, 38 und 40 ist im Tankstutzen 12 ein Durchflußmeßgerät 42 vorgesehen, welches ein durchgeflossenens bzw. getanktes Volumen des Kraftstoffes bestimmt. Mit dem nach der letzten Aktivierung eines Endlagenschalters 32, 36, 38 oder 40 gemessenen Volumenmenge kann der Prozessor 26 den Füllstand auch zwischen zwei Endlagenschaltern 32, 36, 38 und 40 oder oberhalb bzw. unterhalb der Endlagenschalter 32 bzw. 38 berechnen. Auf diese Weise ist es nicht erforderlich, daß das Durchflußmeßgerät 42 für ein großes zu messendes Volumen einen genauen Wert mißt, sondern es kann relativ ungenau messen, da nur jeweils kleine Meßwerte des Durchflußvolumens relevant sind. Das Durchflußmeßgerät 42 arbeitet beispielsweise wie ein Volumenmeßgerät einer Zapfsäule einer Tankstelle und ist vorzugsweise ein durchströmtes Bauteil oder Rohr, welches im Tankstutzen 12 oder an einer anderen Stelle im zwangsgeführten Kraftstoffweg angeordnet ist.

Wenn im Betrieb der Brennkraftmaschine der Kraftstoffbehälter 10 nach und nach geleert wird, berechnet der Prozessor 26 aus den jeweiligen Endlagenschaltersignalen zusammen mit dem Kraftstoffverbrauchsignal 30 den aktuellen Befüllungszustand des Kraftstoffbehälters und gibt diesen über eine Anzeige 44 für einen Fahrer ablesbar aus.

Durch einen Neigunssensor ist ggf. ein entsprechendes Korrektursignal erzeugbar, welches berücksichtigt, daß bei geneigtem Fahrzeug bei gleichem Füllzustand des Kraftstoffbehälters andere Endlagenschaltersignale am Prozessor 26 anliegen. Der Prozessor 26 führt eine logische Verknüpfung aller vorgenannten Signale aus und ermittelt mit einer geeigneten Software ein Ausgangssignal für die Anzeige 44, welches beispielsweise in Form eines Kombiinstrumentes ausgeführt ist.

In einem unkalibrierten Anfangszustand muß der Prozessor 26 lediglich warten, bis der Füllstand des Kraftstoffs im Kraftstoffbehälter 10 einen der Endlagenschalter 32, 36, 38 oder 40, vorzugsweise einen der zusätzlichen Endlagenschalter 40, passiert. An diesem Punkt erfolgt eine automatische Selbstkalibrierung des erfindungsgemäßen Systems.

### BEZUGSZEICHENLISTE

- 10: Kraftstoffbehälter
- 12: Tankstutzen
- 14: Kraftstoff-Fördereinheit
- 16: Schnellentlüftungsnippel
- 17: minimaler Füllstand
- 18: Entlüftungsystem
- 19: maximaler Füllstand
- 20: erste Kraftstoffleitung
- 22: zweite Kraftstoffleitung
- 24: Einspritzanlage
- 26: integrierter Schaltkreis oder Prozessor
- 28: Vorrichtung zur Kraftstoffverbrauchsmessung
- 30: Kraftstoffverbrauchsignal
- 32: erster Endlagenschalter
- 34: Kraftstoffentnahmestelle
- 36: zweiter Endlagenschalter
- 38: dritter Endlagenschalter
- 40: zusätzliche Endlagenschalter
- 42: Durchflußmeßgerät
- 44: Anzeige

## Patentansprüche

1. Kraftstoffvorratsanzeige für einen Kraftstoffbehälter (10) eines Kraftfahrzeugs, welches eine ein Kraftstoffverbrauchsignal (30) abgebende Vorrichtung (28) zum Messen des Kraftstoffverbrauchs einer Brennkraftmaschine aufweist,
gekennzeichnet durch
eine Endlagenschaltereinrichtung mit wenigstens einem Endlagenschalter (32,36,38,40) im Kraftstoffbehälter (10), welcher in Schwerkraftrichtung oberhalb einer Kraftstoffentnahmestelle (34) in einer Höhe angebracht ist, welche einem vorbestimmten Füllstand (17,19) entspricht, wobei die Endlagenschaltereinrichtung derart ausgebildet ist, daß diese ein Endlagenschaltersignal abgibt, welches davon abhängig ist, welcher oder welche der Endlagenschalter (32,36,38,40) in Kraftstoff eintauchen; und
eine elektrische Schaltung (26), welche aus dem Kraftstoffverbrauchsignal (30) zusammen mit jedem Endlagenschaltersignal einen Wert für die Kraftstoffvorratsanzeige berechnet.

2. Kraftstoffvorratsanzeige nach Anspruch 1,
dadurch gekennzeichnet, daß
ein Anzeigeinstrument (44) vorgesehen ist, welches mit der elektrischen Schaltung (26) verbunden ist und einen Wert für den Kraftstoffverbrauch und/oder einen Wert für die Kraftstoffvorratsanzeige anzeigt.

3. Kraftstoffvorratsanzeige nach Anspruch 1 oder 2,
dadurch gekennzeichnet, daß
die elektrische Schaltung (26) ein elektronischer Schaltkreis, insbesondere ein Mikroprozessor oder eine Datenverarbeitungsvorrichtung ist.

4. Kraftstoffvorratsanzeige nach einem der vorhergehenden Ansprüche,
dadurch gekennzeichnet, daß
die Endlagenschaltereinrichtung einen Endlagenschalter (32) für eine Leeranzeige umfaßt, welcher in einer ersten Höhe über der Kraftstoffentnahmestelle (34) angeordnet ist, welche einem minimalen Füllstand des Kraftstoffbehälters (10) entspricht.

5. Kraftstoffvorratsanzeige nach Anspruch 4,
dadurch gekennzeichnet, daß
der Endlagenschalter (32) für die Leeranzeige an einer im Kraftstofftank (10) angeordneten Kraftstoff-Fördereinheit (14) vorgesehen ist.

6. Kraftstoffvorratsanzeige nach einem der vorhergehenden Ansprüche,
dadurch gekennzeichnet, daß
die Endlagenschaltereinrichtung einen Endlagenschalter (36) für eine Reserveanzeige umfaßt, welcher in Schwerkraftrichtung oberhalb der Kraftstoffentnahmestelle (34) in einer zweiten Höhe angeordnet ist, welche einem Füllstand des Kraftstoffbehälters (10) entspricht, bei bzw. unterhalb dem ein Reservewarnsignal, wie beispielsweise eine Reservewarnleuchte, aktiviert ist.

7. Kraftstoffvorratsanzeige nach Anspruch 6,
dadurch gekennzeichnet, daß
der Endlagenschalter (36) für die Reserveanzeige an einer im Kraftstofftank angeordneten Kraftstoff-Fördereinheit (14) vorgesehen ist.

8. Kraftstoffvorratsanzeige nach einem der vorhergehenden Ansprüche,
dadurch gekennzeichnet, daß
die Endlagenschaltereinrichtung einen Endlagenschalter (38) für eine Vollanzeige umfaßt, welcher in Schwerkraftrichtung oberhalb der Kraftstoffentnahmestelle (34) in einer dritten Höhe angeordnet ist, welche einem maximalen Füllstand des Kraftstoffbehälters (10) entspricht.

9. Kraftstoffvorratsanzeige nach Anspruch 8,
dadurch gekennzeichnet, daß
der Endlagenschalter (38) für eine Vollanzeige an einem im Kraftstoffbehälter (10) angeordneten Schnellentlüftungsnippel (16) vorgesehen ist.

10. Kraftstoffvorratsanzeige nach einem der Ansprüche 4 bis 9,
dadurch gekennzeichnet, daß
die Endlagenschaltereinrichtung wenigstens einen zusätzlichen Endlagenschalter (40) umfaßt, welcher in Schwerkraftrichtung oberhalb der Kraftstoffentnahmestelle (34) in einer vierten Höhe zwischen der ersten und dritten Höhe angeordnet ist.

11. Kraftstoffvorratsanzeige nach einem der Ansprüche 4 bis 10,
dadurch gekennzeichnet, daß
die erste Höhe niedriger als die zweite Höhe und die zweite Höhe niedriger als die dritte Höhe ist.

12. Kraftstoffvorratsanzeige nach einem der vorhergehenden Ansprüche,
dadurch gekennzeichnet, daß
für jeden Endlagenschalter (32,36,38,40) ein in den Kraftstoffbehälter (10) eingeschweißter Halter vorgesehen ist.

13. Kraftstoffvorratsanzeige nach einem der vorhergehenden Ansprüche,
dadurch gekennzeichnet, daß
in einem Tankstutzen (12) des Kraftstoffbehälters (10) ein Kraftstoffvolumen-Meßgerät (42) vorgesehen ist, welches ein dem durch den Tankstutzen (12) geflossenen Kraftstoff entsprechendes Kraftstoff-Füllsignal an die elektrische Schaltung abgibt, wobei die elektrische Schaltung (26) den Wert für die Kraftstoffvorratsanzeige zusätzlich unter Berücksichtigung das Kraftstoff-Füllsignal berechnet.

14. Kraftstoffvorratsanzeige nach einem der vorhergehenden Ansprüche,
dadurch gekennzeichnet, daß
ein Neigunssensor vorgesehen ist, welcher eine Neigung des Fahrzeugs bzgl. der Schwerkraftrichtung bestimmt und ein entsprechendes Neigungssignal an die elektrische Schaltung (26) abgibt, wobei die elektrische Schaltung den Wert für die Kraftstoffvorratsanzeige zusätzlich unter Berücksichtigung das Neigungssignals berechnet.

15. Kraftstoffvorratsanzeige nach einem der vorhergehenden Ansprüche,
dadurch gekennzeichnet, daß
weiterhin ein Hebelgeber vorgesehen ist, der den jeweiligen Füllstand erfaßt und ein Signal proportional zum Füllstand abgibt, und daß das Hebelgebersignal zur Korrektur der Kraftstoffvorratsanzeige, insbesondere im Falle des Zutankens einer geringen Kraftstoffmenge, dient.
